# EUROPEAN PATENT SPECIFICATION

(11) **EP 2 058 110 B1**
(45) Date of publication and mention of the grant of the patent: **26.04.2017**
(21) Application number: 08167873.2
(22) Date of filing: 29.10.2008
(51) Int. Cl.: B29C 65/16, F01M 13/04, F02F 7/00

(54) **Laser welded structure and laser welding method**
Laserschweißstruktur und Laserschweißverfahren
Structure soudée par laser et procédé de soudage laser

(30) Priority: 08.11.2007 JP 2007290872
(43) Date of publication of application: 13.05.2009
(73) Proprietor: Toyota Boshoku Kabushiki Kaisha, Kariya-shi, Aichi-ken 448-8651 (JP)
(72) Inventor: Kuno, Tetsuya, Aichi-ken, 448-8651 (JP)
(74) Representative: Appleyard Lees IP LLP

(56) References cited:
- EP-A1- 0 997 261
- JP-A- 2002 195 096
- JP-A- 2003 136 593
- JP-A- 2007 127 014

## Description

The present invention relates to a laser welding structure and a laser welding method applied, for example, to cases where a groove member with oil grooves is laser welded to a baffle plate arranged in the cylinder head cover of an engine.

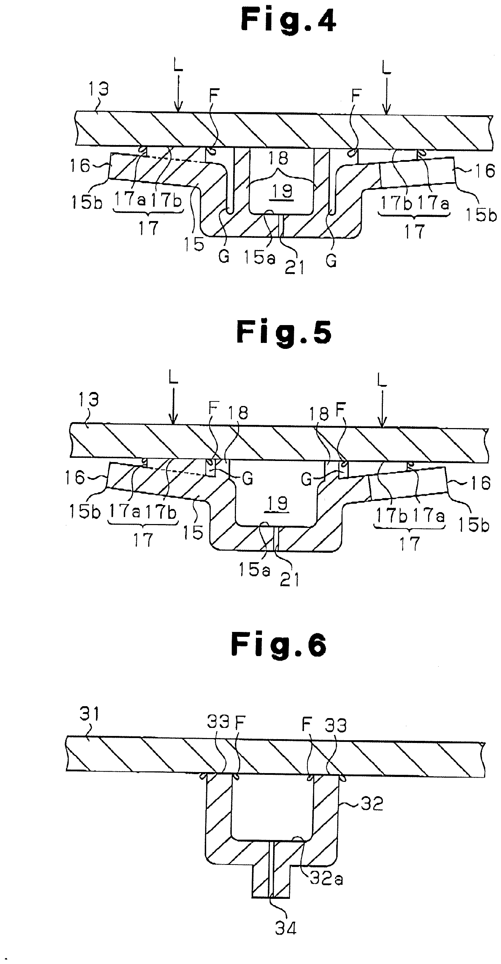

Conventionally, for example, Japanese Laid-Open Patent Publication No. 2007-127014 discloses such a welding structure. In the prior art structure, a synthetic resin groove member 32 having a groove 32a is applied to a synthetic resin baffle plate 31 as shown in Fig. 6. In this state, the baffle plate 31 and the groove member 32 are welded to each other at both ends of the opening. Then, a plurality of supply holes 34 are formed in the bottom of the groove 32a. Lubricating oil supplied to the groove 32a is supplied to components of the engine such as the camshaft through the supply holes 34.

In the above prior art welding structure, inner edges of weld portions 33 face the interior of the groove 32a. Therefore, at the weld portions 33 of the baffle plate 31 and the groove member 32, weld flashes F are created when welding is performed by using laser light. The weld flashes F inside the weld portions 33 can fall in the groove 32a. The fallen flash F can clog the supply holes 34. When such clogging of the supply holes 34 by weld flashes F occurs, the amount of lubricating oil supplied to components that need lubrication is reduced, leading to insufficient lubrication.

EP0997261 relates to a laser joining method for connecting different workpieces made of plastic in which the upper of the laser source facing the workpiece consists of a material transparent to the laser material and the second workpiece of an absorbent for the laser material, such that adjacent contact surfaces of the two pieces are melted and joined together in subsequent cooling and under pressure.

JP 2003-136593 seals in space the burr generated from the wall of the welding between plastic moldings.

JP 2002-195096 discloses a cylinder-head cover which is formed of unabsorbent resin materials whose absorptivity of a laser beam is lower than an absorptivity resin material and an absorptivity resin material which absorbs laser beam attached to a cylinder head of an engine for vehicles.

The present invention was made for solving the above problems in the prior art. Accordingly, it is an objective of the present invention to provide a laser welding structure and a laser welding method that prevent weld flash generated during welding from entering from a weld portion the interior of a groove.

To achieve the foregoing objective, a present invention provides a laser welding structure, in which, with a plate-shaped first member and a plate-shaped second member having a groove overlapped, the members are laser welded at weld portions at both sides of an opening of the groove and a pair of wall portions are formed on at least one of the first member and the second member. The wall portions separating the interior of the groove from the weld portions. The laser welding structure being characterised in that the first member is made of heat-resistant synthetic resin and the second member is formed by a plate of heat-resistant synthetic resin, the second member is attached to the lower surface of the first member, the second member has the groove, which is located in a center with respect to the width and extends along the longitudinal direction, the second member has a flange portion on either side of the upper opening of the groove, the flange portion is formed to extend along the entire length of the second member, projections are formed at predetermined intervals on a side of each flange portion, a weld portion is integrally formed between each projection and the first member, each weld portion includes a protrusion formed on the associated projection and a contact surface, which is located on the lower surface of the second member and corresponds to the protrusion.

Thus, even if weld flashes are created at the weld portions when the first member and the second member are welded to each other at the weld portions located at the sides of the opening of the groove, the wall portions prevent the weld flashes from entering the groove. Therefore, insufficient supply of lubricating oil due to clogging of the holes is prevented.

It is preferable that the heights of the wall portions and the protrusions are set such that, prior to the welding, a space exists between each protrusion and the corresponding contact surface.

In this structure, a distal surface of each wall portion can be pressed against an opposing surface of an opposing member by pressing one of the members to the other member and performing laser welding with each protrusion pressed against a contact surface. Accordingly, a tightly sealed passage is formed between the first member and the groove of the second member, and weld flashes are prevented from entering the passage.

It is preferable that the first member is a baffle plate arranged inside of a cylinder head cover, and the second member is a groove member fixed to the lower surface of the baffle plate, that a supply hole is formed in a bottom wall of the groove of the groove member, and that lubricating oil flows through the groove and is supplied to a predetermined position through the supply hole.

In this case, the lubricating oil is appropriately distributed through the groove in the cylinder head cover of the engine, so that moving components of the engine are lubricated.

It is preferable that the wall portions are formed on the baffle plate, that the protrusions are formed on the groove member, and that the wall portions are pressed against the inner surface of the bottom wall of the groove of the groove member. In this case, a tightly sealed passage is formed in the groove of the groove member.

A second aspect of the present invention relates to a laser welding method applied to the laser welding structure, which is characterized in that laser light is projected onto positions of the protrusions with the protrusions pressed against the corresponding contact surfaces, thereby melting and crushing the protrusions, so that the first member and the second member are welded to each other, and that the distal surface of each wall portion is pressed against an opposing member.

In this case, a laser welding structure achieving the above described operations and advantages is easily obtained.
Fig. 1 is a cross-sectional view of a portion including a cylinder head cover, illustrating a laser welding structure according to a first embodiment;
Fig. 2 is an enlarged cross-sectional view illustrating a part of Fig. 1;
Fig. 3 is a partial perspective view illustrating the laser welding structure of Fig. 1 in a disassembled state;
Fig. 4 is a partial cross-sectional view illustrating a laser welding structure according to a second embodiment;
Fig. 5 is a partial cross-sectional view illustrating a laser welding structure according to a third embodiment; and
Fig. 6 is a partial cross-sectional view illustrating a prior art laser welding structure.

### (First Embodiment)

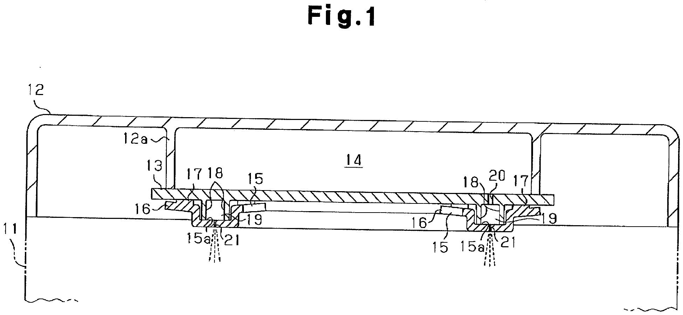

A first embodiment of the present invention will now be described with reference to Figs. 1 to 3.

As shown in Fig. 1, in the present embodiment, a cylinder head cover 12 made of heat-resistant synthetic resin is attached onto a cylinder head 11, which is fixed to an engine cylinder block (not shown). Partition walls 12a project from the inner surface of the top wall of the cylinder head cover 12. A first member made of heat-resistant synthetic resin, which is a baffle plate 13, is welded to the lower ends of the partition walls 12a. An oil separator chamber 14 for separating lubricating oil from blow-by gas is defined between the baffle plate 13, the partition walls 12a, and the top wall of the cylinder head cover 12. Unillustrated means for separating lubricant oil from blow-by gas is located in the oil separator chamber 14.

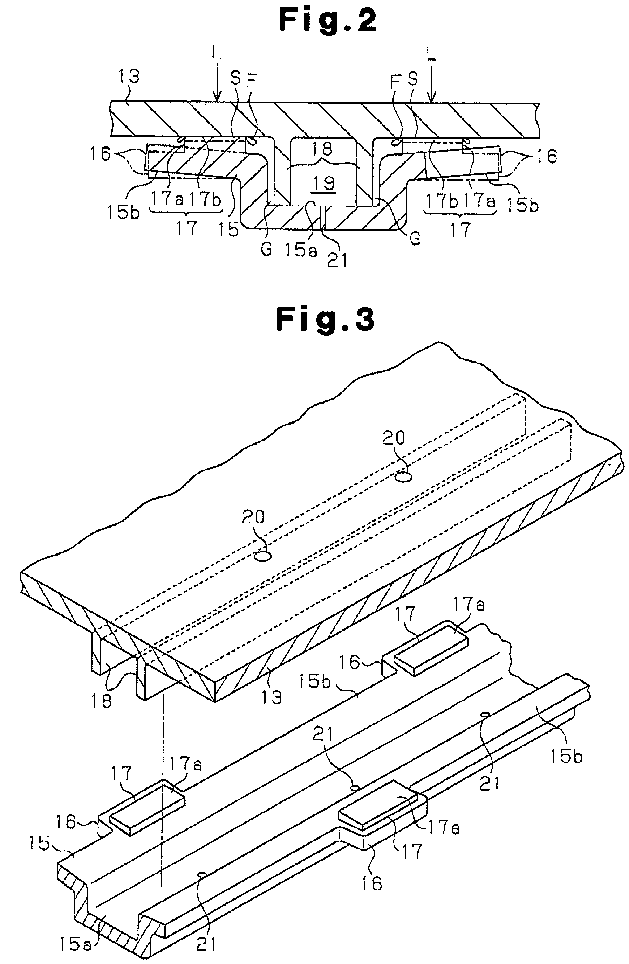

As shown in Figs. 2 and Fig. 3, a second member, or a groove member 15, is attached to the lower surface of the baffle plate 13. The groove member 15 is formed by a plate of heat-resistant synthetic resin, and has a groove 15a, which is located in a center with respect to the width (the lateral direction as viewed in Fig. 2) and extends along the longitudinal direction. The groove member 15 has a flange portion 15b at either side. Specifically, on either side of the upper opening of the groove 15a, a flange portion 15b is formed to extend along the entire length of the groove member 15. Projections 16 are formed at predetermined intervals on a side of each flange portion 15b. A weld portion 17 is integrally formed between each projection 16 and the baffle plate 13. Each weld portion 17 includes a protrusion 17a formed on the associated projection 16 and a contact surface 17b, which is located on the lower surface of the baffle plate 13 and corresponds to the protrusion 17a.

As shown in Figs. 1 and 2, a pair of parallel wall portions 18 project from the lower surface of the baffle plate 13 to extend along the inner surfaces of each groove 15a. Prior to welding of the weld portions 17, when the groove member 15 is put onto the lower surface of the baffle plate 13, so that the wall portions 18 are fitted in the groove 15a, a clearance S exists between the protrusion 17a of the weld portion 17 and the contact surface 17b. That is, the heights of the protrusions 17a and the wall portions 18 are determined such that the clearance S exists between each protrusion 17a and the contact surface 17b before welding is performed.

With the baffle plate 13 and the groove member 15 overlapped, the projections 16 of the groove member 15 are deformed to be pressed against the baffle plate 13 as shown by solid lines in Fig. 2, so that the protrusions 17a of the weld portions 17 closely contact the contact surfaces 17b. In this state, laser light L is projected on to positions of the protrusions 17a from above the baffle plate 13, so that the protrusions 17a and the contact surfaces 17b are melted. In addition, the protrusions 17a are crushed to be integrated with the contact surfaces 17b. Accordingly, the groove member 15 is welded to positions outside of the opening of the groove 15a.

At this time, the distal surface of each wall portion 18 is pressed against the inner surface of the bottom of the groove 15a. Accordingly, inside the groove 15a, a sealed passage 19 is defined by the inner surface of the bottom of the groove 15a, inner surfaces of the wall portions 18, and the lower surface of the baffle plate 13. That is, the passage 19 in the groove 15a is separated from the weld portions 17 located outside of the opening of the groove 15a by the wall portions 18. A gap G is created between each inner surface of the groove 15a and the outer surface of the corresponding wall portion 18.

As shown in Figs. 1 to 3, the baffle plate 13 has through holes 20, which are located along the extending direction of the groove 15a. The through holes 20 allow the oil separator chamber 14 in the cylinder head cover 12 and the passage 19 in the groove 15a to communicate with each other. Supply holes 21 are formed in the bottom wall of the groove 15a. The supply holes 21 are arranged along the extending direction of the groove 15a, and extend from the passage 19 to open downward. Lubrication oil that has been separated from blow-by gas in the oil separator chamber 14 is supplied to the passage 19 via the through holes 20. The lubricating oil flows through the passage 19 and is supplied to predetermined positions such as unillustrated camshafts in the cylinder head 11 via the supply holes 21.

As described above, in the present embodiment, the passage 19 is formed in the groove 15a so as to be separated by the wall portions 18 from the weld portions 17 outside of the opening of the groove 15a. A gap G is created between each inner surface of the groove 15a and the outer surface of the corresponding wall portion 18.

The present embodiment thus provides the following advantages.
(1) As shown in Fig. 2, even if weld flashes F are created at the weld portions 17 when the baffle plate 13 and the groove member 15 are welded to each other at the weld portions 17 located at the sides of the opening of the groove 15a, the wall portions 18 prevent the weld flashes F from entering the passage 19. Instead, the weld flashes F fall into the gap G and stay there. Therefore, the weld flashes F are prevented from entering the passage 19 and from clogging the supply holes 21.
(2) The heights of the wall portions 18 and the protrusions 17a of the weld portions 17 are determined such that a clearance S exists between each protrusion 17a and the contact surface 17b before welding is performed. The flange portions 15b of the groove member 15 and the projections 16 are pressed and deformed toward the baffle plate 13 to eliminate the clearance S, so that the protrusions 17a of the weld portions 17 are caused to closely contact the contact surfaces 17b. In this state, the distal surfaces of the wall portions 18 are pressed against the inner surface of the bottom of the groove 15a by laser welding the protrusions 17a and the contact surfaces 17b to each other. Thus, the tightly sealed passage 19 is formed in the groove 15a. This allows lubricating oil that has been separated from blow-by gas in the oil separator chamber 14 to be reliably supplied to positions that require lubrication, without leaking on the way.

### (Second Embodiment)

A second embodiment of the present invention will now be described. The differences from the first embodiment will mainly be discussed.

In the second embodiment, a pair of wall portions 18 project from the inner surface of the bottom of the groove 15a of the groove member 15 as shown in Fig. 4. With the groove member 15 welded to the baffle plate 13 at weld portions 17 outside of the opening of the groove 15a of the groove member 15, the distal surface of each wall portion 18 is pressed against the lower surface of the baffle plate 13, so that a passage 19 is formed in the groove 15a.

The second embodiment therefore provides the same advantages as the first embodiment.

### (Third Embodiment)

A third embodiment of the present invention will now be described. The differences from the first embodiment will mainly be discussed.

In the third embodiment, a pair of wall portions 18 project at the opening of the groove 15a in the flange portions 15b of the groove member 15. The wall portions 18 are spaced from the protrusions 17a of the weld portion 17 by a predetermined distance as shown in Fig. 5. With the groove member 15 welded to the baffle plate 13 at the weld portions 17, the distal surface of each wall portion 18 is pressed against the lower surface of the baffle plate 13, so that a passage 19 is formed in the groove 15a.

In addition to the same advantages as those of the first embodiment, the third embodiment therefore provides the following advantage.
(3) Since the wall portions 18 are formed on the flange portions 15b, the width of the passage 19 in the groove 15a is widened, so that a great amount of lubricating oil can be conducted.

### (Modifications)

The above described embodiments may be modified as described below.

In any of the illustrated embodiments, both of the baffle plate 13 and the groove member 15 may have a pair of wall portions 18. In this case, when the baffle plate 13 and the groove member 15 are welded to each other at weld portions 17, distal surfaces of the wall portions 18 of the baffle plate 13 and the distal surfaces of the wall portions 18 of the groove member 15 are pressed against each other.

In any one of the illustrated embodiments, both of the baffle plate 13 and the groove member 15 may have protrusions, and laser welding may be performed with the protrusions being pressed against each other. In this case, each protrusion forms a contact surface that contacts another protrusion.

In contrast to the illustrated embodiments, protrusions 17a of the weld portions 17 may be formed on the baffle plate 13, and contact surfaces 17b may be provided on the groove member 15.

## Claims

1. A laser welding structure, wherein, with a plate-shaped first member (13) and a plate-shaped second member (15) having a groove (15a) overlapped, the members (13, 15) are laser welded at weld portions (17) at both sides of an opening of the groove (15a), and
a pair of wall portions (18) is formed on at least one of the first member (13) and the second member (15), the wall portions (18) separating the interior of the groove (15a) from the weld portions (17),
the laser welding structure being **characterized in that**
the first member (13) is made of heat-resistant synthetic resin and the second member (15) is formed by a plate of heat-resistant synthetic resin,
the second member (15) is attached to the lower surface of the first member (13), the second member (15) has the groove (15a), which is located in a center with respect to the width and extends along the longitudinal direction,
the second member (15) has a flange portion (15b) on either side of the upper opening of the groove (15a), the flange portion (15b) is formed to extend along the entire length of the second member (15),
projections (16) are formed at predetermined intervals on a side of each flange portion (15b),
a weld portion (17) is integrally formed between each projection (16) and the first member (13),
each weld portion (17) includes a protrusion (17a) formed on the associated projection (16) and a contact surface (17b), which is located on the lower surface of the second member (13) and corresponds to the protrusion (17a).

2. The laser welding structure according to claim 1, being **characterized in that** the heights of the wall portions (18) and the protrusions (17) are set such that, prior to the welding, a space (S) exists between each protrusion (17a) and the corresponding contact surface (17b).

3. The laser welding structure according to claim 1 or 2, being **characterized in that** the first member (13) is a baffle plate (13) arranged inside of a cylinder head cover (12), and the second member (15) is a groove member (15) fixed to the lower surface of the baffle plate (13), wherein a supply hole (21) is formed in a bottom wall of the groove (15a) of the groove member (15), and lubricating oil flows through the groove (15a) and is supplied to a predetermined position through the supply hole (21).

4. The laser welding structure according to claim 3, being **characterized in that** the wall portions (18) are formed on the baffle plate (13), and the protrusions (17a) are formed on the groove member (15), wherein the wall portions (18) are pressed against the inner surface of the bottom wall of the groove (15a) of the groove member (15).

5. A laser welding method applied to the laser welding structure according to any one of claims 1 to 4, the method being **characterized in that** laser light is projected onto positions of the protrusions (17a) with the protrusions (17a) pressed against the corresponding contact surfaces (17b), thereby melting and crushing the protrusions (17a), so that the first member (13) and the second member (15) are welded to each other, and wherein the distal surface of each wall portion (18) is pressed against an opposing member.

## Patentansprüche

1. Laserschweißstruktur, wobei, mit einem plattenförmigen ersten Element (13) und einem plattenförmigen zweiten Element (15), das eine Nut (15a) überlappt aufweist, die Elemente (13, 15) an Schweißabschnitten (17) auf beiden Seiten einer Öffnung der Nut (15a) laserverschweißt sind, und
wobei ein Paar von Wandabschnitten (18) auf mindestens einem von dem ersten Element (13) und dem zweiten Element (15) gebildet ist, wobei die Wandabschnitte (18) das Innere der Nut (15a) von den Schweißabschnitten (17) trennen,
wobei die Laserschweißstruktur **dadurch gekennzeichnet ist, dass** das erste Element (13) aus einem hitzebeständigen synthetischen Harz besteht und das zweite Element (15) aus einer Platte aus hitzebeständigem synthetischen Harz gebildet ist,
wobei das zweite Element (15) an der unteren Fläche des ersten Elements (13) angebracht ist, wobei das zweite Element (15) die Nut (15a) aufweist, die in einem Zentrum in Bezug auf die Breite angeordnet ist und sich entlang der Längsrichtung erstreckt,
wobei das zweite Element (15) einen Flanschabschnitt (15b) auf beiden Seiten der oberen Öffnung der Nut (15a) aufweist, wobei der Flanschabschnitt (15b) gebildet ist, um sich entlang der gesamten Länge des zweiten Elements (15) zu erstrecken,
wobei Vorsprünge (16) in vorherbestimmten Intervallen auf einer Seite jedes Flanschabschnitts (15b) gebildet sind,
wobei ein Schweißabschnitt (17) einteilig zwischen jedem Vorsprung (16) und dem ersten Element (13) gebildet ist,
wobei jeder Schweißabschnitt (17) eine Erhebung (17a), die auf dem zugeordneten Vorsprung (16) gebildet ist, und eine Kontaktfläche (17b), die auf der unteren Fläche des zweiten Elements (13) angeordnet ist und der Erhebung (17a) entspricht, aufweist.

2. Laserschweißstruktur nach Anspruch 1,
welche **dadurch gekennzeichnet ist, dass** die Höhen der Wandabschnitte (18) und die Erhebungen (17) so eingestellt sind, dass, vor dem Schweißen, ein Zwischenraum (S) zwischen jeder Erhebung (17a) und der entsprechenden Kontaktfläche (17b) existiert.

3. Laserschweißstruktur nach Anspruch 1 oder 2,
welche **dadurch gekennzeichnet ist, dass** das erste Element (13) eine Ablenkblechplatte (13) ist, die innerhalb einer Zylinderkopfabdeckung (12) angeordnet ist, und das zweite Element (15) ein Nutelement (15) ist, das an der unteren Fläche der Ablenkblechplatte (13) befestigt ist, wobei ein Zufuhrloch (21) in einer unteren Wand der Nut (15a) des Nutelements (15) gebildet ist, und Schmieröl durch die Nut (15a) fließt und zu einer vorherbestimmten Position durch das Zufuhrloch (21) geführt wird.

4. Laserschweißstruktur nach Anspruch 3,
welche **dadurch gekennzeichnet ist, dass** die Wandabschnitte (18) auf der Ablenkblechplatte (13) gebildet sind, und die Erhebungen (17a) auf dem Nutelement (15) gebildet sind, wobei die Wandabschnitte (18) gegen die Innenfläche der unteren Wand der Nut (15a) des Nutelements (15) gepresst werden.

5. Laserschweißverfahren, welches auf die Laserschweißstruktur nach einem der Ansprüche 1 bis 4 angewendet wird,
wobei das Verfahren **dadurch gekennzeichnet ist, dass** Laserlicht auf Positionen der Erhebungen (17a) projiziert wird, wobei die Erhebungen (17a) gegen die entsprechenden Kontaktflächen (17b) gepresst werden, wodurch die Erhebungen (17a) geschmolzen und zerbrochen werden, so dass das erste Element (13) und das zweite Element (15) aneinander geschweißt werden, und wobei die distale Fläche jedes Wandabschnitts (18) gegen ein gegenüberliegendes Element gepresst wird.

## Revendications

1. Structure pour soudage laser, dans laquelle, avec un premier organe (13) en forme de plaque et un deuxième organe (15) en forme de plaque ayant une gorge (15a) en chevauchement, les organes (13, 15) sont soudés par laser au niveau de portions de soudage (17) situées des deux côtés de l'ouverture de la gorge (15a), et
une paire de portions de paroi (18) est formée sur au moins l'un du premier organe (13) et du deuxième organe (15), les portions de paroi (18) séparant l'intérieur de la gorge (15a) des portions de soudage (17),
la structure pour soudage laser étant **caractérisée en ce que**
le premier organe (13) est fabriqué en résine synthétique résistant à la chaleur et le deuxième organe (15) est formé d'une plaque en résine synthétique résistant à la chaleur,
le deuxième organe (15) est attaché à la surface inférieure du premier organe (13), le deuxième organe (15) présente la gorge (15a) qui est située au centre par rapport à la largeur et qui s'étend le long de la direction longitudinale,
le deuxième organe (15) présente une portion de bride (15b) de chaque côté de l'ouverture supérieure de la gorge (15a), la portion de bride (15b) est formée de manière à s'étendre le long de toute la longueur du deuxième organe (15),
des saillies (16) sont formées à intervalles prédéterminés sur un côté de chaque portion de bride (15b),
une portion de soudage (17) est formée intégralement entre chaque saillie (16) et le premier organe (13),
chaque portion de soudage (17) comporte une avancée (17a) formée sur la saillie associée (16) et une surface de contact (17b) qui est située sur la surface inférieure du deuxième organe (13) et qui correspond à l'avancée (17a).

2. Structure pour soudage laser selon la revendication 1, **caractérisée en ce que** les hauteurs des portions de paroi (18) et des avancées (17) sont fixées de telle sorte qu'avant le soudage, il existe un espace (S) entre chaque avancée (17a) et la surface de contact (17b) correspondante.

3. Structure pour soudage laser selon la revendication 1 ou 2, **caractérisée en ce que** le premier organe (13) est une plaque de chicane (13) disposée à l'intérieur d'un couvercle de culasse (12), et le deuxième organe (15) est un organe à gorge (15) fixé à la surface inférieure de la plaque de chicane (13), un trou d'alimentation (21) étant formé dans une paroi inférieure de la gorge (15a) de l'organe à gorge (15) et de l'huile de lubrification s'écoulant à travers la gorge (15a) et étant alimentée à une position prédéterminée à travers le trou d'alimentation (21).

4. Structure pour soudage laser selon la revendication 3, **caractérisée en ce que** les portions de paroi (18) sont formées sur la plaque de chicane (13), et les avancées (17a) sont formées sur l'organe à gorge (15), les portions de paroi (18) étant pressées contre la surface interne de la paroi inférieure de la gorge (15a) de l'organe à gorge (15).

5. Procédé de soudage laser appliqué à la structure pour soudage laser selon l'une quelconque des revendications 1 à 4, le procédé étant **caractérisé en ce qu'**un faisceau laser est projeté sur des positions des avancées (17a), les avancées (17a) étant pressées contre les surfaces de contact (17b) correspondantes, en faisant ainsi fondre et en écrasant les avancées (17a), de telle sorte que le premier organe (13) et le deuxième organe (15) soient soudés l'un à l'autre, et la surface distale de chaque portion de paroi (18) étant pressée contre un organe opposé.
